# EUROPEAN PATENT APPLICATION

(11) **EP 3 508 318 A2**
(43) Date of publication of application: **10.07.2019**
(21) Application number: 18215326.2
(22) Date of filing: 21.12.2018
(51) Int. Cl.: B28C 5/42, B60P 3/16, B01F 13/00

(54) **MOBILE SEDIMENTITIOUS/CEMENTITIOUS MATERIAL CONTAINER OR MIXER**

(30) Priority: 05.01.2018 GB 201800201
(71) Applicant: Hymix Ltd, Telford, Shropshire TF3 3AY (GB)
(72) Inventor: HUMPISH, Nicholas, Telford, Shropshire TF3 3AY (GB)
(74) Representative: Wynne-Jones IP Limited

(57) **Abstract**

A drum (100) for a transit mixing vehicle (10) is disclosed. The drum (100) comprises a barrel region (102'), closed at one end and having a longitudinally opposing open end, and a drum mouth member (104'). The drum mouth member (104') comprises a generally frusto-conical collar affixed over said open end of the barrel region (102') and the drum mouth member (104') is formed of a rigid or semi rigid plastic material.

## Description

### Field of the Invention

This invention relates generally to a mobile sedimentitious/cementitious material container or mixer and, more particularly, to a drum for such a container or mixer. The invention extends to a method of manufacturing such a drum, and also to components used in and for manufacturing such a drum.

### Background of the Invention

It is known to provide vehicles or trailers that include containers/drums for mixing or holding sedimentitious/cementitious materials such as concrete, mortar, floor screed, or the like. A typical transit mixing vehicle, such as a concrete mixing truck, comprises a drum mounted for rotation about an inclined axis and an opening at the raised end which serves to receive ingredients to be mixed and to discharge the mixed material during a pour operation.

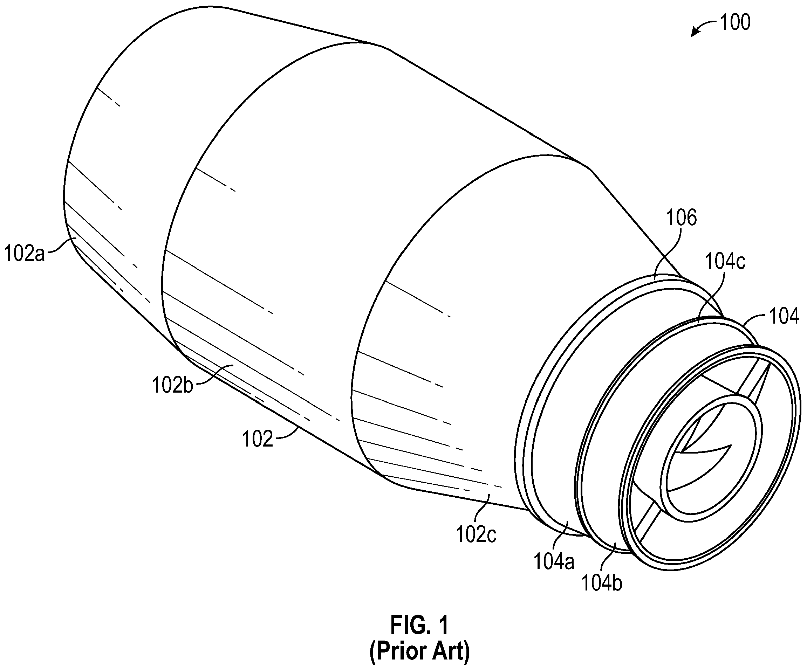

Referring to Figure 1 of the drawings, a typical drum 100 comprises a barrel region 102 and a drum mouth cone 104. The barrel region 102 may typically comprise three integral (or otherwise adjoined) sections, the 'lower' closed section 102a, which has a first diameter at the closed end and tapers outwardly to a second, slightly larger diameter, a second 'middle' section 102b, which is of substantially uniform diameter along its length, such diameter being substantially equal to the above-mentioned second diameter, and a third section 102c, extending from, and having said second diameter at, the second section 102b, and tapering inwardly to a third, smaller diameter adjacent to the open end. The barrel region 102 is formed of milled steel, and a steel track ring 106 is mounted or otherwise formed around the open end of the third section 102c. Typically, a drum 100 further comprises a frusto-conical mouth cone 104, having a diameter substantially the same as the above-mentioned third diameter adjacent to the third region 102c, and tapering inwardly to a much smaller diameter opening. In a conventional drum, the mouth cone is also formed of milled steel and welded or otherwise riveted to the third region 102c of the barrel 102 at the steel track ring 106. In the example illustrated, the mouth cone 104 is effectively formed of two longitudinally concentric, frusto-conical regions 104a, 104b, with an adjoining, circumferential strengthening rib 104c therebetween, although this configuration is not essential in all applications.

The drum is typically provided with internal mixing blades that move the ingredients toward the lower end of the drum for mixing as the drum is rotated in a first direction, and which move the mixed material upward for discharge when the drum is rotated in the opposite direction. A charge hopper is mounted, externally and adjacent, in relation to the drum opening, and is used to feed ingredients into the drum for mixing. A chute may also be provided for facilitating discharge of mixed material (e.g. concrete) from the drum for use.

There is a frequent need for an operative to access the uppermost regions of the truck in order to observe, repair, maintain and service components such as the chute, charge hopper and mixing blades mentioned above. Indeed, there is a repeated need for such access for the purposes of (at least) washing off the drum mouth and discharge hopper after concrete delivery, and also washing the charge hopper and back blades of the mixer after loading. Washing such apparatus regularly is important because, otherwise, the waste material can set and cause damage.

In order to facilitate access to the uppermost regions of the drum, a ladder is provided on all conventional transit mixing vehicles, which ladder is typically fixed to the support assembly carrying the upper portion of the drum, the support assembly itself being mounted on the truck chassis. However, there is always a significant health and safety risk associated with the need to work at heights, and the existence of a ladder offers temptation to operatives seeking (unauthorised) entry to, and egress from, the drum for the purposes of inspection, maintenance and cleaning, which is exceptionally dangerous and thus actively discouraged.

Furthermore, the need to provide a ladder assembly for the purposes described above (and others) adds significant weight to the overall vehicle, which is clearly undesirable, particularly from the point of view of efficiency and economy.

Thus, and more generally, there is an ongoing desire and endeavour in the field of transit mixing vehicles and the like to a) mitigate potentially hazardous operations and improve health and safety conditions for both operatives and others, and b) improve the overall efficiency and economy of transit mixing vehicles.

Semi-automated and automated systems have been proposed for washing off the drum mouth and discharge hopper after concrete delivery. In particular, so-called spray bars are known and provided for this purpose. Thus, drive-through mixer truck wash-down equipment has been developed, that comprises an aluminium frame rack, a pair of top spray bars and two side spray bars. The spray bars are fitted with specially-designed nozzles configured to clean the drum mouth and discharge hopper (and, indeed, other parts of the vehicle) as it is driven through the frame rack assembly.

Whilst such drive-through systems can considerably reduce the time taken to clean the specified regions of the vehicle after use, and also eliminate the need for a ladder (or an operative working at height) to achieve the desired result, it has been an ongoing problem that, without any manual intervention, it is difficult to adequately clean the drum mouth in particular using such systems. This is because the sedimentitious/cementitious material sticks to the milled steel mouth and, particularly once it has started to dry on the journey back to the plant for washing, can be very difficult to remove using a spray bar assembly.

It is, therefore, an object of the present invention to address at least some of these issues.

### Summary of the invention

In accordance with the present invention, there is provided a drum for a transit mixing vehicle, said drum comprising a barrel region, closed at one end and having a longitudinally opposing open end, and a drum mouth member, said drum mouth member comprising a generally frusto-conical collar affixed over said open end of said barrel region, wherein said drum mouth member is formed of a rigid or semi rigid plastic material.

The barrel region may be formed of a sheet metal material, such as milled steel.

Beneficially, the drum mouth member may be formed of polyurethane, such as compressed polyurethane. The drum mouth member may, for example, be moulded or 3D printed of polyurethane material.

In an exemplary embodiment, the drum may further comprise a track ring (e.g. formed of steel) that extends around said barrel region, adjacent to said open end.

In an exemplary embodiment, the drum mouth member may be affixed at one end to said track ring. For example, the drum mouth member may comprise a generally frusto-conical collar having a first open end of a first diameter and a longitudinally opposing second open end of a second, smaller diameter, and the drum mouth member may be affixed at said first end thereof to said track ring. The track ring may comprise one or more studs affixed or otherwise formed on said track ring. Beneficially, the drum mouth member may comprise a peripheral flange at said first end thereof, configured to fit over said one or more studs, to affix said drum mouth member to said track ring. The drum may further comprise one or more nuts configured to tighten an engagement between said drum mouth member and said track ring.

In an exemplary embodiment, the drum may comprise a gasket (e.g. formed of rubber material) located between the or each said stud and said track ring.

A welded portion may be provided between said drum mouth member and said track ring.

The drum may include therein an internal mixing blade configured, in use, to rotate about a longitudinal axis defined between the ends of said barrel region.

In accordance with another aspect of the present invention, there is provided a transit mixing vehicle comprising a drum substantially as described above mounted on a support assembly for rotation about an inclined axis and having said drum mouth member located at an upper end thereof. In an exemplary embodiment, there may be included in said drum an internal mixing blade, the vehicle further comprising drive means, coupled to said drum to, in use, selectively rotate said drum about said longitudinal axis defined between the ends of said barrel region.

In accordance with yet another aspect of the present invention, there is provided a method of manufacturing a drum mouth member for a drum substantially as described above, the method comprising cutting a sheet of compressed polyurethane, and rolling and welding said sheet of compressed polyurethane to form said drum mouth member.

According to another aspect of the present invention, there is provided a drum mouth member for a drum substantially as described above, the drum mouth member comprising a generally frusto-conical collar configured to be affixed over said open end of said barrel region of said drum, wherein said drum mouth member is formed of a rigid or semi rigid plastic material (e.g. polyurethane such as compressed polyurethane material).

These and other aspects of the invention will become apparent from the following Detailed Description.

### Brief Description of the Drawings

Embodiments of the present invention will now be described, by way of examples only, and with reference to the accompanying drawings, in which:
Figure 1 is a schematic perspective diagram of a drum according to the prior art for a transit mixing vehicle;
Figure 2 is a schematic side view of a conventional transit mixing vehicle;
Figure 3 is a schematic perspective view of a drum according to an exemplary embodiment of the present invention for a transit mixing vehicle;
Figure 4A is a schematic perspective view of a drum mouth cone of a drum according to an exemplary embodiment of the present invention;
Figure 4B is a schematic side view of the drum mouth cone of Figure 4A; and
Figure 5B is a close-up view of the portion of Figure 4B marked 'B', illustrating a manner of attaching a drum mouth cone of an exemplary embodiment of the present invention to a steel track ring of a drum barrel.

### Detailed Description

As previously explained, the present invention relates primarily to a drum for a mobile sedimentitious/cementitious material container or mixer, and to an in-transit mixer or agitator including such a drum. However, it is to be understood that the invention extends to a method of manufacturing such a drum, and also to components used in and for manufacturing such a drum.

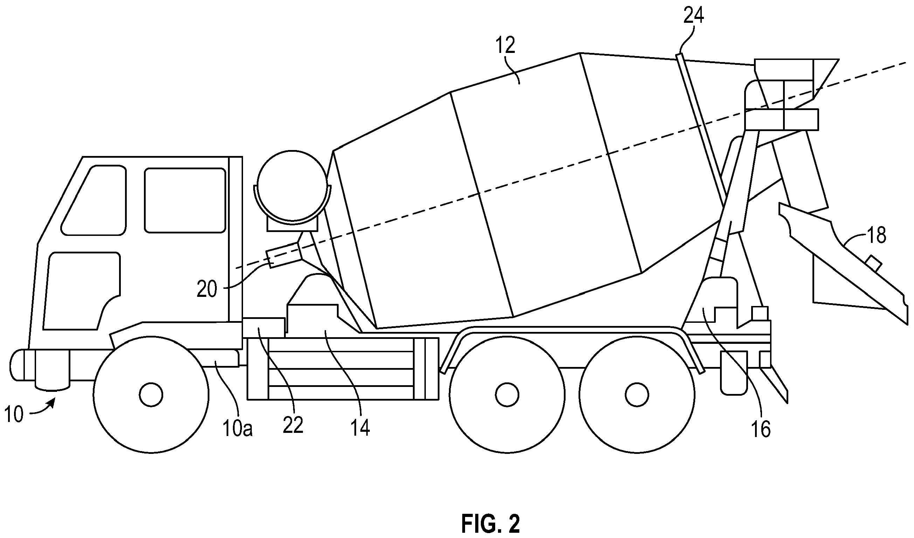

Ready-mix concrete that is manufactured in a factory or batching plant, according to a set recipe, and then delivered to a work site by truck-mounted, in-transit mixers. Referring to Figure 2 of the drawings, a typical in-transit mixer, mounted on a truck 10, comprises a drum 12 mounted between front and rear supports 14, 16 on the rear flatbed of the truck. The drum 12 has a longitudinal axis A and is mounted at an angle with its axis A around 25-40° relative to the horizontal axis defined by the flatbed. The drum 12 is closed at the lower end (nearest the truck chassis 10a) and has an opposing open end, and the assembly includes, at least in some cases, a feed-in/feed-out device 18 for feeding concrete into, and removing concrete from, the drum 12 via the open end.

A hydraulic drive system 20, including a hydraulic motor and reduction gears, is provided at the closed end of the drum 12 and configured, in use, to rotate the drum 12 about the axis A. The power take-off connection for the hydraulic drive system 20 is indicated generally at 22.

As previously explained in relation to Figure 1 of the drawings, the drum 12 comprises a barrel region and a drum mouth cone. The barrel region may typically comprise two or three integral sections: at least the lower closed section which has a first diameter at the closed end and tapers outwardly to a main, slightly larger diameter section which tends to be of substantially uniform diameter along its length before tapering inwardly at the open end. The barrel region tends to be formed of milled steel, and a steel track ring is mounted or otherwise formed around the open end of the barrel region of the drum. Typically, and as explained in relation to Figure 1, a drum 12, 100 further comprises a frusto-conical mouth cone, having a diameter substantially the same as that of the open end of the drum and tapering inwardly to a much smaller diameter opening. In a conventional drum, the mouth cone is also formed of milled steel and welded or otherwise riveted over the open end of the drum 12, 100 at the steel track ring.

As previously explained, the drum 12 is typically provided with internal mixing blades that move the ingredients toward the lower end of the drum for mixing as the drum is rotated in a first direction, and which move the mixed material upward for discharge when the drum is rotated in the opposite direction. A charge hopper is mounted, externally and adjacent, in relation to the drum opening and is used to feed ingredients into the drum for mixing. A chute 18 may also be provided for facilitating discharge of mixed material (e.g. concrete) from the drum for use.

In some cases, and as explained above, a ladder may be provided on a conventional in-transit mixing vehicle, the ladder typically being fixed to the support assembly 16 carrying the upper portion of the drum 12, the support assembly 16 itself being mounted on the truck chassis. However, there is a significant health and safety risk associated with the need to work at heights. Furthermore, the need to provide a ladder assembly adds significant weight to the overall vehicle, which is clearly undesirable, particularly from the point of view of efficiency and economy.

Semi automated and automated systems have been proposed for washing off the drum mouth and discharge hopper after concrete delivery. In particular, so-called spray bars are known and provided for this purpose. Whilst such drive-through systems can considerably reduce the time to clean the specified regions of the vehicle after use, and also eliminate the need for a ladder to achieve the desired result, it has been an ongoing problem that, without any manual intervention, it is difficult to adequately clean the drum mouth in particular using such systems. This is because the sedimentitious/cementitious material sticks to the milled steel drum mouth and, particularly once it has started to dry on the journey back to the plant for washing, can be very difficult to remove using a spray bar assembly alone; and it is an object of aspects of the present invention to address this issue.

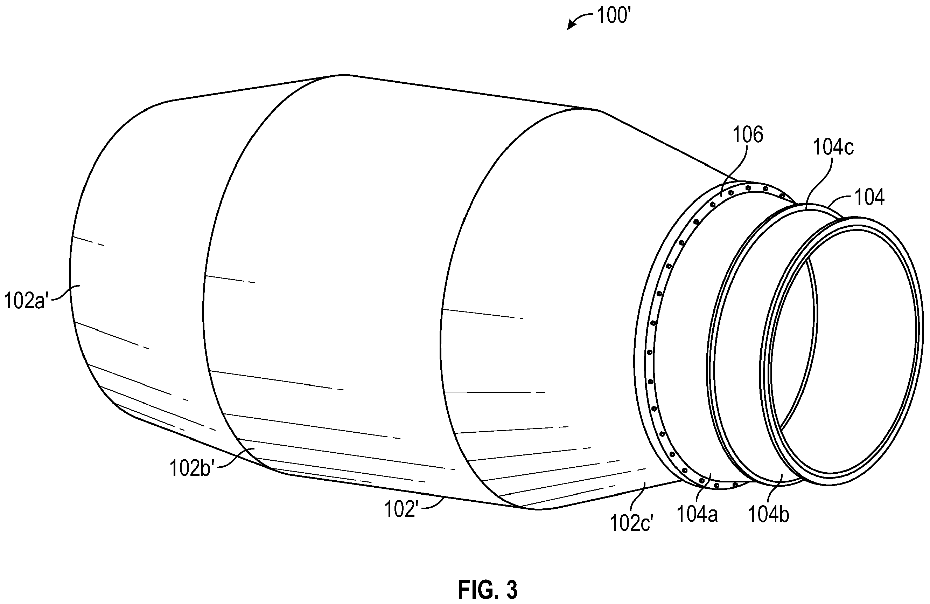

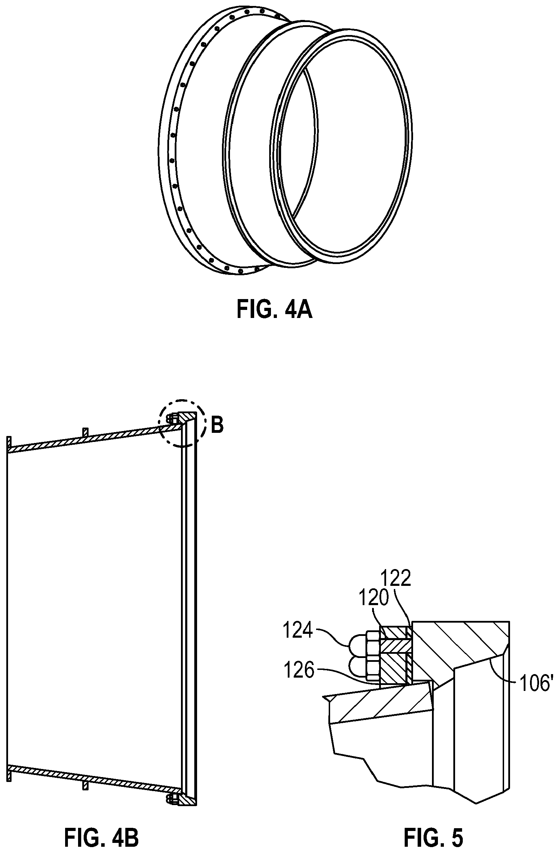

Referring now to Figures 3, 4A and 4B of the drawings, an exemplary embodiment of the present invention is illustrated. Referring first to Figure 3 of the drawings, a drum 100' according to an exemplary embodiment of the present invention is similar in many respects to that described in relation to Figure 1 of the drawings. Thus, a drum 100' for an in-transit mixing vehicle comprises a barrel region 102' that may typically comprise three integral (or otherwise adjoined) sections: the 'lower', closed section 102a', which has a first diameter at the closed end and tapers outwardly to a second, slightly larger diameter, a second 'middle' section 102b', which is of substantially uniform diameter along is length, such diameter being substantially equal to the above-mentioned second diameter, and a third section 102c', extending from, and having said second diameter at the second section 102b' and tapering inwardly to a third, smaller diameter adjacent to the open end defined by the drum mouth cone 104'. The barrel region 102' is formed of milled steel, and a steel track ring 106' is mounted or otherwise formed around the distal end of the third section 102c' of the barrel region 102'.

Referring additionally to Figures 4A and 4B of the drawings, the drum 100' further comprises a generally frusto-conical mouth cone 104'. In this case, the drum mouth cone 104' is formed of a plastic material, specifically (in this exemplary embodiment) compressed polyurethane.

In a preferred method of manufacture, the drum mouth cone 104' is cut from sheets of compressed polyurethane, rolled and then welded using a plastic welding technique of hot air and plastic filler material that will be known to a person skilled in the art in other technical fields. A major advantage of this manufacturing technique is that the drum mouth cone 104' can be readily repaired using the same technique, should this be required.

More generally, the potential advantages of using a drum mouth cone of the type described above include:
- The reduced risk of injury resulting from working at height (because a ladder is not needed to effect cleaning thereof and, instead, a drive through spray bar system may be effectively used);
- Reduced weight;
- Reduced cost; and
- Minimised cleaning. The material used for the drum mouth cone is wear resistant and concrete is less likely to stick to it. Furthermore, it is quieter than conventional drum mouth cones and, of course, it does not rust or otherwise deteriorate like its milled steel counterpart. By just using plastic (e.g. compressed polyurethane) for the drum mouth cone, the present invention yields maximum benefit from the material properties thereof, with minimal additional expenditure.

It will be apparent to a person skilled in the art that there are a number of ways in which the drum mouth cone 104' can be attached to the steel track ring 106'. For example, tapped holes could be machined into the ring 106'. However, in practice, this may result in the need for a thicker (and, therefore, heavier) ring that would result in increased cost and weight. Thus, and referring to Figure 5 of the drawings, in a preferred exemplary embodiment, a plurality of studs 120 may be welded onto the steel track ring 106' at a common PCD (Pitch Circular Diameter), optionally using a compressive gasket 122. The drum mouth cone 104' is beneficially flanged such that it can be placed over the studs 120 and then tightened and secured using nuts 124. The nuts 124 may, for example, comprise cap nuts. For example, nylon-insert lock nuts (or 'Nyloc') may be beneficial in reducing vibration, whereas flanged lock nuts may be beneficial for spreading the load. However, the present invention is not necessarily intended to be limited in this regard. Irrespective of the method of fixing employed, a fillet weld (illustrated in Figure 5 at 126) may be formed between the drum mouth cone 104' and the steel track ring 106'.

It is thought that the drum mouth cone 104' of this exemplary embodiment of the present invention may readily lend itself to being moulded in one piece, or even formed by 3D printing, but the present invention is not intended to be in any way limited in this regard.

It will be apparent to a person skilled in the art, from the foregoing description, that modifications and variations can be made to the described embodiments without departing from the scope of the invention as defined by the appended claims.

## Claims

1. A drum for a transit mixing vehicle, said drum comprising a barrel region, closed at one end and having a longitudinally opposing open end, and a drum mouth member, said drum mouth member comprising a generally frusto-conical collar affixed over said open end of said barrel region, wherein said drum mouth member is formed of a rigid or semi rigid plastic material.

2. A drum according to claim 1, wherein said drum mouth member is formed of polyurethane.

3. A drum according to claim 2, wherein said drum mouth member is formed of compressed polyurethane.

4. A drum according to any of the preceding claims, further comprising a track ring that extends around said barrel region, adjacent to said open end.

5. A drum according to claim 4, wherein the drum mouth member is affixed at one end to said track ring.

6. A drum according to claim 5, wherein said drum mouth member comprises a generally frusto-conical collar having a first open end of a first diameter and a longitudinally opposing second open end of a second, smaller diameter, and wherein said drum mouth member is affixed at said first end thereof to said track ring.

7. A drum according to claim 5 or claim 6, wherein said track ring comprises one or more studs affixed or otherwise formed on said track ring.

8. A drum according to claim 7, wherein said drum mouth member comprises a peripheral flange at said first end thereof, configured to fit over said one or more studs, to affix said drum mouth member to said track ring.

9. A drum according to claim 7 or 8, comprising a gasket located between the or each said stud and said track ring.

10. A drum according to any of the preceding claims, including therein an internal mixing blade configured, in use, to rotate about a longitudinal axis defined between the ends of said barrel region.

11. A transit mixing vehicle comprising a drum according to any of the preceding claims mounted on a support assembly for rotation about an inclined axis and having said drum mouth member located at an upper end thereof.

12. A transit mixing vehicle according to claim 11, including in said drum an internal mixing blade, the vehicle further comprising drive means, coupled to said drum to, in use, selectively rotate said drum about said longitudinal axis defined between the ends of said barrel region.

13. A method of manufacturing a drum mouth member for a drum according to any of claims 1 to 10, comprising cutting a sheet of compressed polyurethane, and rolling and welding said sheet of compressed polyurethane to form said drum mouth member.

14. A drum mouth member for a drum according to any of claims 1 to 10, comprising a generally frusto-conical collar configured to be affixed over said open end of said barrel region, wherein said drum mouth member is formed of a rigid or semi rigid plastic material.

15. A drum mouth member according to claim 14, wherein said plastic material comprises compressed polyurethane.
